# FASCICULE DE BREVET EUROPEEN

(11) **EP 4 522 424 B1**
(45) Date de publication et mention de la délivrance du brevet: **01.07.2026**
(21) Numéro de dépôt: 23726924.6
(22) Date de dépôt: 10.05.2023
(51) Int. Cl.: B60B 3/08, F16D 55/36

(54) **ROUE D'AERONEF COMPRENANT UNE STRUCTURE MONOBLOC**
LUFTFAHRZEUGRAD MIT EINTEILIGER STRUKTUR
AIRCRAFT WHEEL OF ONE-PIECE STRUCTURE

(30) Priorité: 12.05.2022 FR 2204537
(43) Date de publication de la demande: 19.03.2025
(73) Titulaire: Safran Landing Systems, 78140 Vélizy-Villacoublay (FR)
(72) Inventeur: MERMET-GUYENET, Loic, 77550 MOISSY-CRAMAYEL (FR); LANDOT, Robin, 77550 MOISSY-CRAMAYEL (FR); BERENGER, Thierry, 77550 MOISSY-CRAMAYEL (FR); MARTIN, Xavier, 77550 MOISSY-CRAMAYEL (FR)
(74) Mandataire: Cabinet Boettcher
(86) Numéro de dépôt international: PCT/EP2023/062515
(87) Numéro de publication internationale: WO 2023/217916

(56) Documents cités:
- EP-A1- 3 144 555
- WO-A1-2020/249783
- FR-A1- 2 990 188

## Description

La présente invention concerne le domaine de l'aéronautique et plus particulièrement celui des atterrisseurs d'aéronef.

### ARRIERE PLAN DE L'INVENTION

Un atterrisseur d'aéronef comprend généralement une jambe ayant une première extrémité pour son articulation à une structure de l'aéronef et une deuxième extrémité pourvue d'un essieu sur lequel est montée pour pivoter au moins une roue.

Une roue d'aéronef comprend classiquement deux demi-roues comportant chacune une demi-jante annulaire, un moyeu coaxial à la demi-jante et un voile reliant le moyeu à la demi-jante. Les voiles sont traversés par des boulons solidarisant les demi-jantes l'une à l'autre. Chacune des demi-jantes comporte une collerette en saillie radiale vers l'extérieur pour coopérer avec un pneumatique qui est reçu entre les deux collerettes. Les demi-roues sont fabriquées généralement par matriçage et usinage.

L'espace délimité par l'une des demi-jantes et le moyeu en regard reçoit une pile de disques de frein comprenant des disques rotors liés en rotation à la demi-jante et des disques stators liés en rotation à un tube de couple qui entoure le moyeu et qui est porté par la jambe.

Lors d'un freinage, les disques de frein frottent les uns contre les autres en dégageant de la chaleur. Pour éviter que ce dégagement de chaleur ne dégrade le pneumatique, des écrans thermiques sont rapportés entre les disques et la surface interne de la demi-jante. Les écrans thermiques sont fixés par des vis ou comportent des parties élastiques coopérant avec des cales montées entre les disques rotors et la demi-jante.

En outre, il peut arriver que le frein s'enflamme et il est important d'empêcher ou au moins retarder l'atteinte du pneumatique par les flammes. A cette fin, il est prévu un anneau pare-flamme (couramment dénommé « chin ring ») qui est rapporté sur la demi-jante dans laquelle s'étend la pile de disques. L'anneau pare-flamme s'étend en saillie axiale d'un bord externe de la demi-jante à l'opposé du voile. L'anneau pare-flamme est fixé au bord externe de la demi-jante par des vis traversant radialement ledit bord externe de la demi-jante.

La fabrication d'une telle roue d'aéronef demande donc des usinages complexes, ainsi que des opérations de montage des écrans thermiques et de l'anneau pare-flamme. Une telle roue d'aéronef est connue du document WO2020249783A1.

### OBJET DE L'INVENTION

L'invention a notamment pour but de fournir une roue d'aéronef ayant une structure différente de celles connues.

### RESUME DE L'INVENTION

A cet effet, on prévoit, selon l'invention une roue d'aéronef comprenant une première demi-jante annulaire, un premier moyeu coaxial à la première demi-jante et un premier voile reliant le premier moyeu à la première demi-jante. La première demi-jante comporte une première collerette en saillie radiale vers l'extérieur pour coopérer avec un pneumatique. Et caractérisé en ce que la roue comprend un manchon en une seule pièce avec la première demi-jante, le premier voile et le premier moyeu pour former une première demi-roue monobloc. Le manchon : s'étend coaxialement à la première demi-jante ; a une surface externe s'étendant à distance d'une surface interne de la première demi-jante ; a une première extrémité s'étendant en saillie axiale de la première demi-jante à l'opposé du premier voile ; est pourvu intérieurement de nervures internes destinées à lier en rotation la roue avec des rotors de frein logés entre le manchon et le premier moyeu.

Ainsi, le manchon, qui est en une seule pièce avec la demi-jante, le voile et le moyeu joue à la fois le rôle d'écran thermique et celui d'anneau pare-flamme. Cet agencement limite les opérations de montage et peut être aisément réalisé par fabrication additive, de préférence sur lit de poudre, par exemple à partir de titane.

Selon un mode de réalisation particulier, des nervures externes relient la surface externe du manchon à la surface interne de la première demi-jante.

La demi-jante, les nervures externes et le manchon forment une paroi intérieurement cloisonnée. Ainsi, les nervures externes et le manchon assurent une fonction de renforcement de la rigidité de la demi-jante et les nervures externes et la demi-jante assurent une fonction de renforcement du manchon. On peut dès lors avoir une épaisseur relativement faible tant pour la demi-jante que pour le manchon par rapport à une structure de roue classique. Une telle paroi cloisonnée présente donc, à résistance égale, une masse inférieure à une paroi épaisse de même matériau. L'invention concerne également un atterrisseur équipé d'une telle roue et un aéronef comprenant un tel atterrisseur.

D'autres caractéristiques et avantages de l'invention ressortiront à la lecture de la description qui suit d'un mode de réalisation particulier et non limitatif de l'invention.

### BREVE DESCRIPTION DES DESSINS

Il sera fait référence aux dessins annexés, parmi lesquels :
[Fig. 1] la figure 1 est une vue schématique partielle d'un avion selon l'invention, plus particulièrement un atterrisseur de celui-ci ;
[Fig. 2] la figure 2 est une demi-vue en coupe axiale d'une extrémité libre de cet atterrisseur ;

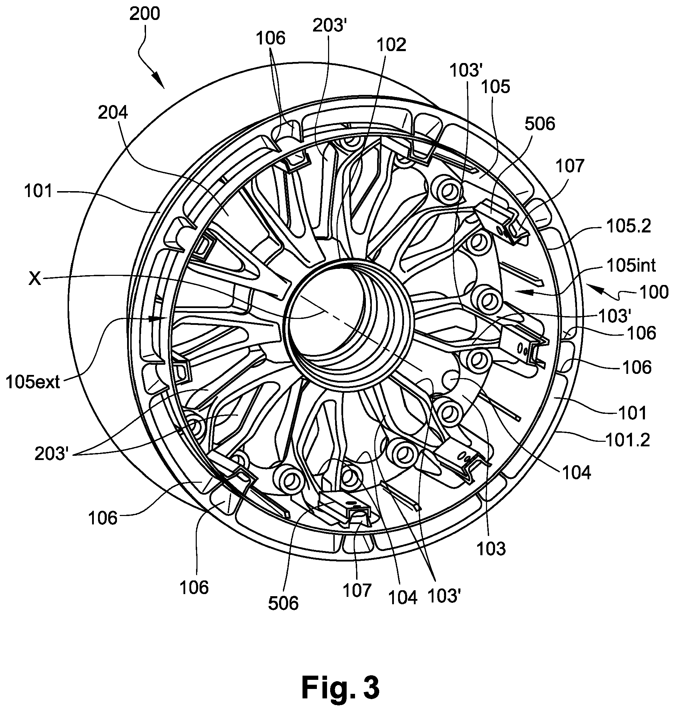

[Fig. 3] la figure 3 est une vue en perspective d'une roue selon l'invention.

### DESCRIPTION DETAILLEE DE L'INVENTION

En référence aux figures, l'invention s'applique à un aéronef A comprenant des atterrisseurs principaux P comportant chacun une jambe J ayant une première extrémité articulée à une structure de l'aéronef A et une deuxième extrémité portant deux roues R reçues à pivotement sur un essieu E autour d'un axe X par l'intermédiaire de roulements à rouleaux coniques B.

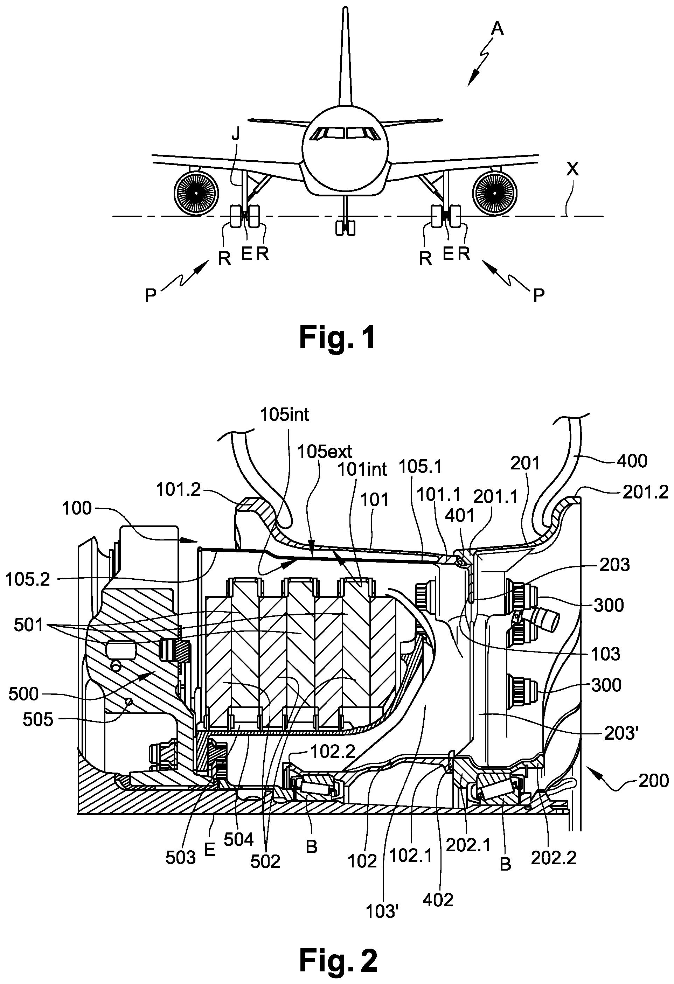

Conformément à la figure 2, chaque roue R comprend deux demi-roues 100, 200 qui sont assemblées l'une à l'autre par des boulons 300 et retiennent entre elle un pneumatique 400.

Les demi-roues 100, 200 comprennent une demi-jante 101, 201, un moyeu 102, 202 coaxial à la demi-jante 101, 201 et un voile 103, 203 reliant le moyeu 102, 202 à la demi-jante 101, 201.

Les demi-jantes 101, 201 ont une forme annulaire et comprennent un premier bord annulaire 101.1, 201.1 et un deuxième bord annulaire 101.2, 201.2. Les moyeux 102, 202 ont une forme tubulaire et comprennent une première extrémité 102.1, 202.1 reliée par le voile 103, 203 au premier bord annulaire 101.1, 201.1 et une deuxième extrémité 102.2, 202.2 libre. Les premiers bords annulaires 101.1, 201.1 sont pressés l'un contre l'autre par les boulons 300 qui sont engagés dans une partie périphérique épaissie des voiles 103, 203 qui jouxte les premiers bords annulaires 101.1, 201.1. Le deuxième bord annulaire 101.2, 201.2 de la demi-jante 101, 201 est un bord libre relevé pour former une collerette en saillie radiale vers l'extérieur par rapport au reste de la demi-jante 101, 201. Le pneumatique 400 est monté sur les demi-jantes 101, 201 entre les deuxièmes bords annulaires 101.2, 201.2 qui sont en contact étanche avec le pneumatique 400 et empêchent que le pneumatique 400 se dégage de la jante formée par les demi-jantes 101, 201. Un joint d'étanchéité 401 est pressé entre les premiers bords annulaires 101.1, 201.1 des demi-jantes 101, 201 pour que les demi-jantes 101, 201 et le pneumatique 400 définissent un volume étanche apte à recevoir un gaz sous pression assurant le gonflage du pneumatique 400. La deuxième demi-jante 201 est ici percée d'un canal ayant une extrémité pourvue d'une valve de gonflage s'étendant entre deux boulons 300. Un joint d'étanchéité 402 est également pressé entre les deux premières extrémités 102.1, 202.1 des moyeux 102, 202 pour empêcher que des salissures s'introduisent entre les roulements B.

Le voile 103 comprend des bras 103' radiaux laissant entre eux des ouvertures 104 disposées en regard d'ouvertures 204 laissées entre des bras 203' radiaux du voile 203. Les bras 103', 203' ont une section transversale oblongue, ici rectangulaire, ayant un grand axe sensiblement parallèle à l'axe central des moyeux 102, 202 (c'est-à-dire que la section transversale oblongue a sa plus grande dimension selon l'axe central des moyeux 102, 202). La section transversale des extrémités des bras 103', 203' (en contact avec les moyeux 102, 202 et les demi-jantes 101, 201) est supérieure à la section transversale des bras 103', 203' en leur partie centrale pour améliorer la rigidité des demi-jantes 100, 200. En particulier, la plus grande dimension de la section transversale des bras 103', 203' à leurs extrémités est supérieure à la plus grande dimension de la section transversale des bras 103', 203' en leur partie centrale.

La demi-roue 100 comprend un manchon 105 s'étendant coaxialement à la première demi-jante 101 depuis la première extrémité 101.1 de la première demi-jante 101. Plus précisément, le manchon 105 a une première extrémité 105.1 solidaire de la première extrémité 101.1 de la première demi-jante 101 et une deuxième extrémité 105.2 s'étendant en saillie axiale de la deuxième extrémité 101.2 de la première demi-jante 101 à l'opposé du voile 103. La deuxième extrémité 105.2 comprend ici un bord terminal formé d'un bourrelet arrondi. Le manchon 105 est étagé et comprend un premier tronçon au voisinage de la première extrémité 105.1 et un deuxième tronçon qui s'étend au voisinage de la deuxième extrémité 105.2 et qui est raccordé au premier tronçon par un tronçon intermédiaire tronconique : le premier tronçon a un diamètre interne inférieur à un diamètre interne du deuxième tronçon et un diamètre externe inférieur à un diamètre externe du deuxième tronçon.

Le manchon 105 a une surface externe 105ext s'étendant à distance d'une surface interne 101int de la première demi-jante 101 : la surface externe 105ext est pourvue de paires de nervures externes 106 s'étendant axialement le long du manchon 105 et reliant la surface externe 105ext du manchon 105 à la surface interne 101int de la première demi-jante 101. Les paires de nervures externes 106 sont disposés symétriquement par rapport à l'axe central du moyeu 102.

Le manchon 105 a une surface interne 105int pourvue, au niveau du premier tronçon, de nervures internes 107 s'étendant axialement le long du manchon 105. Les nervures internes 107 sont disposées symétriquement par rapport à l'axe central du moyeu 102. Chaque nervure interne 107 a une section transversale en C avec une âme centrale ayant des bords longitudinaux d'où partent des ailes ayant un bord longitudinal solidaire de la surface interne 105int. Chacune des nervures internes 107 s'étend en regard de l'une des nervures externes 106.

Le manchon 105 et les nervures 106, 106 sont en une seule pièce avec la première demi-jante 101, le premier voile 103 et le moyeu 102 de sorte que la première demi-roue 100 est monobloc. La demi-roue 200 est elle aussi d'une structure monobloc, la demi-jante 201, le moyeu 202 et le voile 203 étant d'une seule pièce.

Les deux demi-roues 100, 200 sont ici fabriquées par un procédé de fabrication additive sur lit de poudre en utilisant une poudre à base de titane. Ce procédé de fabrication est connu en lui-même et ne sera pas plus détaillé ici. La fabrication additive permet de limiter les épaisseurs au juste nécessaire (sans recourir à un usinage) pour assurer les performances mécaniques requises notamment pour : les demi-jantes 101, 201 ; les moyeux 102, 202 ; les voiles 103, 203 ; le manchon 104.

La roue R comprend un dispositif de frein 500 comprenant une pile de disques comportant des disques rotors 501 ayant des encoches périphériques engagées sur les nervures internes 107 du manchon 105 pour lier en rotation la roue R avec les disques rotors 501 et des disques stators 502 ayant des encoches périphériques engagées sur des nervures externes 503 d'un tube de couple 504 entourant l'essieu E et le moyeu 102. Le tube de couple 504 a une extrémité solidaire d'une couronne porte-actionneurs 505, connue en elle-même, solidaire de l'essieu E de sorte que les nervures externes 503 du tube de couple 504 lient en rotation les disques stators 502 avec l'essieu E. On notera que le tube de couple 504 a une extrémité opposée à la couronne porte-actionneurs 505 qui est relevée pour envelopper en partie le dernier disque de la pile de disques et protéger les voiles 103, 203 de la chaleur. Chacune des nervures internes 107 est ici recouverte par un capot 506 servant à la fois d'écran thermique pour limiter la conduction de chaleur depuis les disques rotors 501 vers le manchon 105 et de surface de glissement pour les disques rotors 501 afin de limiter l'usure par frottement des nervures internes 107.

La couronne porte-actionneurs 505 du dispositif de freinage est pourvue d'actionneurs pour exercer un effort de presse sur la pile de disques et freiner la roue R.

On note que les ouvertures 104, 204 en coïncidence les unes des autres permettent une évacuation au moins partielle de la chaleur produite lors du freinage.

Bien entendu, l'invention n'est pas limitée au mode de réalisation décrit mais englobe toute variante entrant dans le champ de l'invention telle que définie par les revendications.

En particulier, la roue peut avoir une structure différente de celle décrite.

Les demi-roues peuvent par exemple être reliées l'une à l'autre par d'autre moyen que des boulons ou être en une seule pièce.

Les bras 103', 203' de chaque voile 103, 203 peuvent avoir une section transversale de forme différente de celle décrite, et par exemple une section elliptique.

La première extrémité 105.1 du manchon 105 peut être écartée du voile 102, le manchon 105 n'étant lié au reste de la demi-roue 100 que par les nervures externes 106.

Au lieu de chaque paire de nervures externes 106 adjacentes, on peut avoir une nervure externe unique de plus forte épaisseur mais on augmente alors le poids de la demi-roue.

Au lieu de nervures internes 107 creuses, on peut avoir des nervures internes pleines mais on augmente alors le poids de la demi-roue.

Les nervures internes 107 peuvent être décalées angulairement par rapport aux nervures externes 106.

Chaque demi-roue peut être fabriquée dans un matériau différent du titane, par exemple l'aluminium, et par un autre procédé de fabrication que la fabrication additive sur lit de poudre, par exemple par soudage et usinage.

Chaque voile peut avoir une structure plus traditionnelle sous forme d'une paroi mince discoïdale ou tronconique.

Le tube de couple peut être lié à la jambe ou directement à l'essieu.

Bien que l'invention ait été décrite en relation avec une roue pourvue d'un dispositif de freinage par friction, l'invention s'applique également aux roues pourvues d'un dispositif de freinage magnétique ou autre.

## Revendications

1. Roue (R) d'aéronef (A) comprenant une première demi-jante annulaire (101), un premier moyeu (102) coaxial à la première demi-jante (101) et un premier voile (103) reliant le premier moyeu à la première demi-jante, la première demi-jante comportant une première collerette (101.2) en saillie radiale vers l'extérieur pour coopérer avec un pneumatique (400), **caractérisé en ce que** la roue comprend un manchon (105) en une seule pièce avec la première demi-jante, le premier voile et le premier moyeu pour former une première demi-roue (100) monobloc et **en ce que** le manchon : s'étend coaxialement à la première demi-jante ; a une surface externe (105ext) s'étendant à distance d'une surface interne (101int) de la première demi-jante ; a une extrémité (105.2) s'étendant en saillie axiale de la première demi-jante à l'opposé du premier voile ; est pourvu intérieurement de nervures internes (107) destinées à lier en rotation la roue avec au moins un disque rotor (501) de frein logés entre le manchon et le premier moyeu.

2. Roue (R) selon la revendication 1, dans laquelle les nervures internes (107) sont en une seule pièce avec le manchon (105).

3. Roue (R) selon la revendication 2, dans laquelle les nervures internes (107) ont une section transversale en C avec une âme ayant des bords longitudinaux d'où partent des ailes ayant des bords longitudinaux raccordés à une surface interne (105int) du manchon (105).

4. Roue (R) selon l'une quelconque des revendications précédentes, dans laquelle des nervures externes (106) relient la surface externe (105ext) du manchon (105) à la surface interne (101int) de la première demi-jante (101).

5. Roue (R) selon l'une quelconque des revendications précédentes, dans laquelle le premier voile (103) comprend des bras (103') délimitant entre eux des ouvertures (104).

6. Roue (R) selon la revendication 5, dans laquelle les bras (103') ont une section transversale oblongue ayant un grand axe sensiblement parallèle à l'axe central du premier moyeu (102).

7. Roue (R) selon l'une quelconque des revendications précédentes, comprenant une deuxième demie-roue (200) monobloc comportant, d'une seule pièce, une deuxième demi-jante annulaire (201), un deuxième moyeu (202) coaxial à la deuxième demi-jante et un deuxième voile (203) reliant le deuxième moyeu à la deuxième demi-jante, la deuxième demi-jante comportant une deuxième collerette (201.2) en saillie radiale vers l'extérieur pour coopérer avec le pneumatique (400) reçu entre la première collerette et la deuxième collerette.

8. Roue (R) selon la revendication 7, dans laquelle les voiles (103, 203) comprennent des bras (103', 203') délimitant entre eux des ouvertures (104, 204) en coïncidence les unes des autres, les bras (103', 203') ayant de préférence une section transversale oblongue ayant un grand axe sensiblement parallèle à l'axe central des moyeux (102, 202).

9. Roue (R) selon l'une quelconque des revendications précédentes, comprenant un dispositif de freinage (500) comprenant une pile de disques logée entre le manchon (105) et un tube de couple (504) s'étendant autour du premier moyeu (102), la pile de disques comprenant des disques rotors (501) pourvus d'encoches périphériques engagées sur les nervures internes (107) du manchon et des disques stators (502) liés en rotation au tube de couple.

10. Atterrisseur comprenant une jambe (J) ayant une première extrémité pour son articulation à une structure d'aéronef et une deuxième extrémité pourvue d'un essieu (E) sur lequel est montée pour pivoter au moins une roue (R) selon la revendication 10, le tube de couple (504) étant fixe par rapport à la jambe.

## Patentansprüche

1. Rad (R) eines Luftfahrzeugs (A), umfassend eine erste ringförmige Felgenhälfte (101), eine erste Nabe (102), die koaxial zur ersten Felgenhälfte (101) angeordnet ist, und eine erste Radscheibe (103), die die erste Nabe mit der ersten Felgenhälfte verbindet, wobei die erste Felgenhälfte einen ersten Bund (101.2) umfasst, der radial nach außen vorsteht, um mit einem Reifen (400) zusammenzuwirken, **dadurch gekennzeichnet, dass** das Rad eine Hülse (105) umfasst, die einstückig mit der ersten Felgenhälfte, der ersten Radscheibe und der ersten Nabe ausgebildet ist, um eine erste einteilige Radhälfte (100) zu bilden, und dass die Hülse: sich koaxial zur ersten Felgenhälfte erstreckt; eine Außenfläche (105ext) aufweist, die sich in einem Abstand zu einer Innenfläche (101int) der ersten Felgenhälfte erstreckt; ein Ende (105.2) aufweist, das sich axial von der ersten Felgenhälfte auf der der ersten Radscheibe gegenüberliegenden Seite erstreckt; innen mit Innenrippen (107) versehen ist, die dazu bestimmt sind, das Rad drehfest mit mindestens einer zwischen der Hülse und der ersten Nabe angeordneten Rotorscheibe (501) zu verbinden.

2. Rad (R) nach Anspruch 1, wobei die Innenrippen (107) einstückig mit der Hülse (105) ausgebildet sind.

3. Rad (R) nach Anspruch 2, wobei die Innenrippen (107) einen C-förmigen Querschnitt aufweisen, mit einem Steg, der Längskanten aufweist, von denen Flügel mit Längskanten ausgehen, die mit einer Innenfläche (105int) der Hülse (105) verbunden sind.

4. Rad (R) nach einem der vorstehenden Ansprüche, wobei Außenrippen (106) die Außenfläche (105ext) der Hülse (105) mit der Innenfläche (101int) der ersten Felgenhälfte (101) verbinden.

5. Rad (R) nach einem der vorstehenden Ansprüche, wobei die erste Radscheibe (103) Zwischenarme (103') aufweist, die zueinander Öffnungen (104) begrenzen.

6. Rad (R) nach Anspruch 5, wobei die Zwischenarme (103') einen länglichen Querschnitt aufweisen, dessen Längsachse im Wesentlichen parallel zur Mittelachse der ersten Nabe (102) verläuft.

7. Rad (R) nach einem der vorstehenden Ansprüche, umfassend eine zweite einteilige Radhälfte (200), die einstückig eine zweite ringförmige Felgenhälfte (201) umfasst, eine zweite Nabe (202), die koaxial zur zweiten Felgenhälfte angeordnet ist, und eine zweite Radscheibe (203), die die zweite Nabe mit der zweiten Felgenhälfte verbindet, wobei die zweite Felgenhälfte einen zweiten Bund (201.2) umfasst, der radial nach außen vorsteht, um mit dem Reifen (400) zusammenzuwirken, der zwischen dem ersten Bund und dem zweiten Bund angeordnet ist.

8. Rad (R) nach Anspruch 7, wobei die Radscheiben (103, 203) Zwischenarme (103', 203') umfassen, die untereinander Öffnungen (104, 204) begrenzen, die miteinander fluchten, wobei die Zwischenarme (103', 203') vorzugsweise einen länglichen Querschnitt aufweisen, dessen Längsachse im Wesentlichen parallel zur Mittelachse der Naben (102, 202) verläuft.

9. Rad (R) nach einem der vorstehenden Ansprüche, umfassend eine Bremsvorrichtung (500) mit einem Scheibenstapel, der zwischen der Hülse (105) und einem Torsionsrohr (504) angeordnet ist, das sich um die erste Nabe (102) erstreckt, wobei der Scheibenstapel Rotorscheiben (501) umfasst, die mit umlaufenden Kerben versehen sind, die in die Innenrippen (107) der Hülse eingreifen, sowie Statorscheiben (502), die drehfest mit dem Torsionsrohr verbunden sind.

10. Fahrwerk mit einem Federbein (J), das ein erstes Ende zur Anlenkung an eine Luftfahrzeugstruktur und ein zweites Ende aufweist, das mit einer Achse (E) versehen ist, an der mindestens ein Rad nach Anspruch 10 (R) schwenkbar gelagert ist, wobei das Torsionsrohr (504) fest mit dem Federbein verbunden ist.

## Claims

1. Wheel (R) for an aircraft (A), comprising a first annular half-rim (101), a first hub (102) coaxial with the first half-rim (101) and a first disc (103) connecting the first hub to the first half-rim, the first half-rim comprising a first radially outwardly projecting collar (101.2) for interacting with a tyre (400), **characterised in that** the wheel comprises a sleeve (105) formed as a single piece with the first half-rim, the first disc and the first hub to form a first one-piece first half-wheel (100), and **in that** the sleeve: extends coaxially with the first half-rim; has an outer surface (105ext) extending at a distance from an inner surface (101int) of the first half-rim; has an end (105.2) projecting axially from the first half-rim on the opposite side to the first disc; and is provided internally with internal ribs (107) intended for rotatably connecting the wheel to at least one brake rotor disc (501) housed between the sleeve and the first hub.

2. Wheel (R) according to claim 1, wherein the internal ribs (107) are formed as a single piece with the sleeve (105).

3. Wheel (R) according to claim 2, wherein the internal ribs (107) have a C-shaped cross section that has a web having longitudinal edges from which there extend flanges having longitudinal edges coupled to an inner surface (105int) of the sleeve (105).

4. Wheel (R) according to any of the preceding claims, wherein external ribs (106) connect the outer surface (105ext) of the sleeve (105) to the inner surface (101int) of the first half-rim (101).

5. Wheel (R) according to any of the preceding claims, wherein the first disc (103) comprises arms (103') that define openings (104) between them.

6. Wheel (R) according to claim 5, wherein the arms (103') have an oblong cross section having a major axis substantially parallel to the central axis of the first hub (102).

7. Wheel (R) according to any of the preceding claims, comprising a second one-piece half-wheel (200) comprising, as a single piece, a second annular half-rim (201), a second hub (202) coaxial with the second half-rim and a second disc (203) connecting the second hub to the second half-rim, the second half-rim comprising a second radially outwardly projecting collar (201.2) for interacting with the tyre (400) received between the first collar and the second collar.

8. Wheel (R) according to claim 7, wherein the discs (103, 203) comprise arms (103', 203') that define aligned openings (104, 204) between them, the arms (103', 203') preferably having an oblong cross section having a major axis substantially parallel to the central axis of the hubs (102, 202).

9. Wheel (R) according to any of the preceding claims, comprising a braking device (500) that comprises a stack of discs housed between the sleeve (105) and a torque tube (504) that extends around the first hub (102), the stack of discs comprising rotor discs (501) provided with peripheral notches engaged on the internal ribs (107) of the sleeve, and stator discs (502) rotatably connected to the torque tube.

10. Landing gear comprising a strut (J) having a first end for being hinged to an aircraft structure and a second end provided with an axle (E) on which at least one wheel (R) according to claim 10 is pivotally mounted, the torque tube (504) being fixed in place relative to the strut.
